# EUROPEAN PATENT APPLICATION

(11) **EP 4 372 312 A1**
(43) Date of publication of application: **22.05.2024**
(21) Application number: 22210046.3
(22) Date of filing: 28.11.2022
(51) Int. Cl.: G01C 21/32, G01C 21/00, G06T 7/00, G06V 20/00, G01C 21/30

(54) **METHOD AND COMPUTING SYSTEM FOR PROCESSING DIGITAL MAP DATA, AND METHOD OF PROVIDING OR UPDATING DIGITAL MAP DATA OF A NAVIGATION DEVICE**

(30) Priority: 15.11.2022 EP 22207657
(71) Applicant: TomTom Global Content B.V., 1011 AC Amsterdam (NL)
(72) Inventor: De Groote, Tom, 1011AC Amsterdam (NL); De Seranno, Alexander, 1011AC Amsterdam (NL); Van Assche, Bastiaan, 1011AC Amsterdam (NL)
(74) Representative: Meier, Florian

(57) **Abstract**

A first digital map (41) and a second digital map (42) are processed to identify matching objects by a map data processing system (30). The first digital map (41) is used to generate a first ordered array of pixels. The second digital map (42) is used to generate a second ordered array of pixels (72). A machine learning (ML) model (31) is used to determine at least one score indicative of a likelihood that the first digital map object (52) corresponds to the second digital map object (62).

## Description

### TECHNICAL FIELD

Embodiments of the invention relate to techniques associated with digital maps. Embodiments of the invention relate in particular to methods and computing systems that are operative to determine whether a first digital map object of a first digital map corresponds to a second digital map object of a second digital map. Embodiments of the invention relate in particular to methods, systems, and devices operable to process a first digital map and a second digital map for purposes such as map merging, using attributes of one map in association with the other map, performing map data updates, autonomous vehicle navigation and control tasks, and/or providing map data for a navigation device.

### BACKGROUND

Navigation devices are widely used and very popular, owing, e.g., to their capability of providing assistance in navigation tasks and their capability of utilizing information on changed traffic conditions.

Navigation device functions such as dynamic route search and/or traffic warning generation or other vehicle functions such as autonomous or semi-autonomous control operations are based on digital map data. It may be desirable to identify objects that correspond to each other in different digital maps. Such an identification of corresponding or matching objects is required for performing tasks such as map merging, without being limited thereto.

The identification of matching objects in different digital maps can be an arduous task. Different digital maps may have different formats, different numbers of objects, different levels of precision, etc.

Conventional techniques of identifying matching objects in such digital maps require domain-specific knowledge. This applies in particular to a feature engineering step, in which expert knowledge is conventionally required to establish which features are relevant for assessing the likelihood that a first digital map object in a first digital map corresponds to a second digital map object in a second digital map.

The need of domain-specific knowledge, often specific to both maps, for creating matching algorithms makes the matching process complex, involved, and error-prone. This applies in particular to feature engineering performed based on domain-specific knowledge. These features are conventionally used for hand-crafted rules to then form a road network matcher.

The conventional process is associated with various drawbacks. The conventional process is time expensive and requires expert knowledge for feature engineering. The conventional process is not generic. For illustration, features are often a combination of generic features (e.g., geometry) and map specific features (e.g., type of road). The conventional process may have low quality in the sense that not all cases can be covered with this process, resulting in blind spots or overlapping rules, leading to incorrect results of matching.

### SUMMARY

It is an object of embodiments of the invention to provide methods, systems, and devices that provide or utilize enhanced techniques of identifying objects in different digital maps that correspond to each other. It is in particular desirable to provide methods, systems, and devices which allow corresponding objects to be identified in different digital maps without relying on expert knowledge of the digital map data formats for feature engineering. Alternatively or additionally, it is desirable to provide methods, systems, and devices which allow matching objects to be identified in different digital maps in a manner that lends itself to being applied to a wide variety of, optionally all, possible map data formats.

According to embodiments, methods, systems, and devices as recited in the independent claims are provided. The dependent claims define preferred embodiments.

According to embodiments, there are provided methods and computing systems that translate a road network matching problem into an image classification task. Machine learning techniques, such as a deep learning machine learning (ML) technique can then be applied to identify corresponding roads within different networks of different digital maps.

A method of processing a first digital map and a second digital map according to an aspect of the invention comprises the following steps:
using the first digital map to generate a first ordered array of pixels, the first ordered array of pixels representing a first digital map object in a region contained in both the first digital map and the second digital map, the first digital map object being included in the first digital map;
using the second digital map to generate a second ordered array of pixels, the second ordered array of pixels representing a second digital map object in the region, the second digital map object being included in the second digital map;
using a machine learning, ML, model to determine at least one score indicative of a likelihood that the first digital map object corresponds to the second digital map object.

The ML model has an input layer that receives at least the first ordered array of pixels and the second ordered array of pixels. The ML model has an output layer that outputs the at least one score.

In the method, ordered arrays of pixel values are generated from the first and second digital maps. These ordered arrays of pixel values may represent two-dimensional images which indicate the presence or absence of an object, such as a road or other navigable element, at various pixels of the ordered array.

The processing of the ordered arrays is performed using the ML model, which does not need to be trained separately for different formats of first and second digital maps. The ML model may be trained for the generic task of matching objects in the images represented by the various ordered pixel arrays.

The method according to this aspect of the invention thereby obviates the need for expert knowledge for feature engineering related to the respective domain and is less error-prone than conventional techniques.

The method may be performed by or using one or several integrated circuits.

All pixel values may be selected from a group comprising or consisting of a first set of one or more first pixel values and a second set of one or more second pixel values.

A pixel of the first ordered array of pixels may have a pixel value included in the first set of one or more first pixel values if the first digital map object overlaps the pixel. A pixel of the first ordered array of pixels may have a pixel value included in the second set of one or more second pixel values if the first digital map object does not overlap the pixel.

A pixel of the second ordered array of pixels may have a pixel value included in the first set of one or more first pixel values if the object overlaps the pixel. A pixel of the second ordered array of pixels may have a pixel value included in the second set of one or more second pixel values if the object does not overlap the pixel.

The second set may comprise or consist of a single pixel value only (e.g., a logical zero to indicate non-overlapping arrangement with the pixel).

The first set may comprise or consist of a single pixel value only (e.g., a logical one to indicate overlapping arrangement with the pixel) or a set of at least two second pixel values. The set of at least two second pixel values may comprise second pixel values indicative of a hierarchy of infrastructure objects, such as, without limitation, road classes.

The first ordered array of pixels and the second ordered array of pixels may be arrays of binary pixel values.

The ML model may be an ML model that has been trained using labeled training image data generated from at least one pair of different maps. The labels may indicate whether or not the depicted objects in the images correspond to each other in the sense that they represent the same real-world object.

The labeled training image data may include pixel arrays generated from at least two different pairs of maps having different map formats and/or data structures. Robustness of the ML model performance is thereby enhanced.

All binary pixel values may be selected from a group consisting of a first pixel value and a second pixel value.

The pixel values in the first, second and optional additional ordered arrays do not need to be binary. For illustration, different pixel values may indicate different road classes. The pixel values may be selected from a finite set of values that represents different hierarchy levels of path elements. The path elements may include roads in which a motor vehicle such as a car is allowed to drive and paths which are dedicated for the use of pedestrians or cyclists and prohibited for motor vehicles.

A pixel of the first ordered array of pixels may have the first pixel value if the first digital map object overlaps the pixel. A pixel of the first ordered array of pixels may have the second pixel value if the first digital map object does not overlap the pixel. A pixel of the second ordered array of pixels may have the first pixel value if the object overlaps the pixel. A pixel of the second ordered array of pixels may have the second pixel value if the object does not overlap the pixel.

The input layer further may further receive a third ordered array of pixels representing one or several additional first digital map objects in the region, the one or several one or several additional first digital map objects being included in the first digital map and being different from the first digital map object.

The input layer may further receive a fourth ordered array of pixels representing one or several additional second digital map objects in the region, the one or several one or several additional second digital map objects being included in the second digital map and being different from the second digital map object.

The third and fourth ordered arrays of pixels may represent objects such as roads, pedestrian or bike paths adjacent to the first digital map object and the second digital map object. By taking into consideration such adjacent objects, the matching accuracy can be improved.

The third and fourth ordered arrays of pixel values may have binary pixel values which can have only two different values. This makes the implementation and training of the ML model particularly simple.

The third and fourth ordered arrays of pixel values may be non-binary pixel values. This increases versatility. The non-binary pixel values may be or may comprise pixel values representing a hierarchy of road classes.

The first digital map may comprise first nodes and first edges interconnecting the first nodes. The second digital map may comprise second nodes and second edges interconnecting the second nodes. The first digital map object may be one of the first edges. The second digital map object may be one of the second edges.

The first edges and the second edges may represent infrastructure objects on which motor vehicles are allowed to drive.

The first edges and the second edges may represent infrastructure objects on which cars are allowed to drive.

The first digital map may further comprise additional first edges representing infrastructure objects prohibited for use by motor vehicles. The second digital map may further comprise additional second edges representing infrastructure objects prohibited for use by motor vehicles.

The input layer may further receive one or several first additional ordered arrays of pixels representing at least one of the additional first edges, and one or several second additional ordered arrays of pixels representing at least one of the additional second edges.

In this method, objects such as pedestrian and bike paths that are prohibited for use by vehicles may be taken into consideration when determining the at least one score for first and second digital map objects that represent roads on which a motor vehicle, such as a car, is allowed to drive.

The additional first edges may comprise bike and/or pedestrian pathways in the first digital map. The additional second edges may comprise bike and/or pedestrian pathways in the second digital map.

The first ordered array of pixels, the second ordered array of pixels, each of the one or several first additional ordered arrays of pixels, and each of the one or several second additional ordered arrays of pixels may respectively consist of X x Y pixels, wherein X and Y are integers greater than 1, and wherein the region is a rectangular region comprising the X x Y pixels.

Y may be equal to X. This choice may be particularly useful for accommodating various relative rotations between objects in the different maps. This choice may also particularly useful for accommodating a wide variety of different shapes of the first and second objects and their neighborhood that is taken into consideration for determining the at least on score.

The method may further comprise generating a three-dimensional tensor that comprises at least the first ordered array and the second ordered array, wherein the input layer receives the three-dimensional tensor.

The three-dimensional tensor may have size X × Y × Z, wherein X, Y, and Z are integers, wherein X and Y are greater than 1, and wherein Z is equal to or greater than 2. Z may be equal to or greater than 4 (e.g., to consider roads adjacent to the first and second digital map objects). Z may be equal to or greater than 8 (e.g., to consider pedestrian and/or bike pathways in proximity to the first and second digital map objects in the matching process).

The method may further comprise repeating the steps of generating ordered arrays and processing the ordered arrays for a plurality of pairs of first and second digital map objects. Thereby, different matching candidates may be checked by quantifying the likelihood that a candidate second digital map object corresponds to (i.e., represent the same real-world object as) the first digital map object.

The ML model may be or may comprise an artificial neural network (ANN).

The ML model may be or may comprise a deep learning model.

The ML model may be or may comprise a residual neural network (RNN).

The ML model may be or may comprise a convolutional neural network (CNN).

The ML model may be or may comprise a quantum ML model.

The method may further comprise training the ML model using training data.

The training data may comprise labels, wherein the labels indicate, for each of a plurality of sets of first and second edges of two distinct digital training maps, whether the first edge corresponds to the second edge.

The ML model may be trained using supervised training.

The ML model may be trained using unsupervised training.

The ML model may be trained using semi-supervised training.

Training the ML model may comprise techniques such as gradient descent to adjust parameters of the ML model. The parameters of the ML model that are adjusted during training may depend on the specific implementation of the ML model.

The labeled training data may comprise pixel arrays generated from at least two different pairs of maps.

Training the ML model may comprise generating, from a first digital training map a plurality of first training pixel arrays. Training the ML model may comprise generating, from a first digital training map a plurality of second training pixel arrays. A label assigned to any pair of a first training pixel array and a second training pixel array may indicate whether or not objects (such as roads) in the first and second training pixel arrays of the pair correspond to each other in the sense that they represent the same real-world object (e.g., road).

The first and second digital training maps are different digital maps. The first digital training map may have a first data format for storing map objects and the second digital training map may have a second data format for storing map objects, the second data format being different from the first data format.

The first and second digital training maps may have map formats that are different from those of map formats of one or both of the first and second digital maps for which road network matching is subsequently performed using the trained ML model.

Training the ML model may comprise generating, from at least one additional digital training map, an additional plurality of additional training pixel arrays. The at least one additional digital training map may have a map format, in particular data structures for map objects, which may be different from both he first and second digital training maps. Robustness of the ML model performance can be enhanced by performing the training with a variety of different digital training maps having a variety of different map data formats.

It will be appreciated that the various digital training maps overlap to generate a sufficient number of training pixel arrays from different digital training maps that show corresponding objects.

The first digital map and/or the second digital map may comprise data generated using probe trace data. The probe trace data may be or may comprise a location trace. The location trace may be a global navigation satellite system (GNSS) trace or Floating car data, without being limited thereto. The probe trace data may identify a sequence of locations, optionally in a time-dependent manner.

The method may further comprise using the at least one score to determine whether a map update is to be performed. This may be particularly expedient if one of the first and second digital maps is obtained from probe data. For illustration, if there is an increasing number of vehicle traces that is turned into an object into a first digital map but which does not have a corresponding object in a second digital map used in a server and/or navigation device and/or vehicle control device, this indicates that a map update may be warranted.

The method may further comprise using the at least one score to initiate a map merging of the first digital map and the second digital map.

In the map merging process, the at least one score may be used to identify the second digital map object in the second digital map that best corresponds to any given first digital map object.

The method may further comprise performing a map merging to generate a third digital map from the first digital map and the second digital map.

The map merging may use the score to determine whether the first digital map object in the first digital map corresponds to the second digital map object in the second digital map.

The map merging may comprise combining attributes of the first digital map object in the first digital map and attributes of the second digital map object in the second digital map if the score indicates that the first digital map object corresponds to the second digital map object.

The method may further comprise outputting the third digital map to at least one navigation device for use in a vehicle navigation operation or a vehicle control operation.

Data of the third digital map may be added in an additional layer of map data of the navigation device.

The method may further comprise using, by at least one server, the third digital map to perform a vehicle navigation operation.

Data of the third digital map may be added in an additional layer of map data of the server.

The method may further comprise providing the third digital map for storage in a map data repository.

Data of the third digital map may be added in an additional layer of map data of the map data repository.

The method may further comprise using, by at least one navigation device or control circuit onboard a vehicle, data of the third digital map to perform a vehicle control operation.

The vehicle control operation may comprise an autonomous driving operation.

The method may further comprise using, by at least one navigation device or control circuit onboard a vehicle, data of the third digital map to perform a vehicle navigation operation.

The vehicle navigation operation may comprise one or several of a route search, route guidance, generation of warnings or alarms.

According to another aspect of the invention, there is provided a machine-readable instruction code which, when executed by a computer system or server, causes the computer system or server to perform the method according to any aspect or embodiment disclosed herein.

The machine-readable instruction code may be embodied in a non-transitory medium.

The machine-readable instruction code may be embodied in a signal that may be transmitted over an air interface.

According to another aspect of the invention, there is provided a non-transitory storage medium having stored machine-readable instruction code therein, wherein the machine-readable instruction code, when executed by a computer system or server, causes the computer system or server to perform the method according to any aspect or embodiment disclosed herein.

According to another aspect of the invention, there is provided a method of providing or updating digital map data of a navigation device, the method comprising executing the method of processing first and second digital maps and using the at least one score to provide or update at least part of the digital map data of the navigation device.

An additional digital map layer may be stored in the digital map data of the navigation device.

Using the at least one score to provide or update at least part of the digital map data of the navigation device may comprise transmitting data obtained by a map merging operation that uses the at least one score. The data may be transmitted over a wireless or wired interface.

The additional digital map layer may include at least some data elements of the third digital map determined using the at least one score.

According to another aspect of the invention, there is provided a computing system for processing a first digital map and a second digital map, the computing system comprising:
a storage system operative to store the first digital map and the second digital map; and
at least one integrated circuit coupled to the storage system and operative to:
   use the first digital map to generate a first ordered array of pixels, the first ordered array of pixels representing a first digital map object in a region contained in both the first digital map and the second digital map, the first digital map object being included in the first digital map;
   use the second digital map to generate a second ordered array of pixels, the second ordered array of pixels representing a second digital map object in the region, the second digital map object being included in the second digital map;
   use a machine learning, ML, model to determine at least one score indicative of a likelihood that the first digital map object corresponds to the second digital map object.

The ML model has an input layer that receives at least the first ordered array of pixels and the second ordered array of pixels.

The ML model has an output layer that outputs the at least one score.

In operation of the processing system, ordered arrays of pixel values are generated from the first and second digital maps. These ordered arrays of pixel values may represent two-dimensional images which indicate the presence or absence of an object, such as a road or other navigable element, at various pixels of the ordered array.

The processing system is operative such that processing of the ordered arrays is performed using the ML model, which does not need to be trained separately for different formats of first and second digital maps. The ML model may be trained for the generic task of matching objects in the images represented by the various ordered pixel arrays.

The processing system according to this aspect of the invention thereby obviates the need for expert knowledge related to the respective domain for feature engineering and is less error-prone than conventional techniques.

The at least one integrated circuit may be operative to perform the method of any one of aspect or embodiment disclosed herein.

According to another aspect of the invention, there is disclosed a system which comprises the computing system and at least one navigation or vehicle control device operative to receive and use results of the processing performed by the computing system.

The navigation or vehicle control device may be operative to perform at least one navigation or vehicle control operation based on at least the results of the processing performed by the computing system.

According to another aspect of the invention, there is disclosed a navigation device or a vehicle control device which is operative to use a result of the map processing method to perform at least one navigation or vehicle control operation.

The navigation or vehicle control device may be operative to perform at least one navigation or vehicle control operation based on at least the results of the processing performed by the computing system.

According to further embodiments, there is disclosed a use of results of the map merging and/or object matching by a server, navigation device, or vehicle controller for map data maintenance, map data updating, navigation operations, driver assist functions, semi-autonomous vehicle control operations, and/or autonomous vehicle control operations.

The use may comprise processing the results of the map merging and/or object matching to perform at least one navigation task (such as route search or route guidance) and/or at least one vehicle control operation (such as an automatic steering or engine control operation).

Various effects and advantages are attained by embodiments of the invention. The methods, systems, and devices allow road network matching to be performed without requiring domain-specific knowledge. The methods, systems, and devices are operable for predicting a likelihood that any given second digital map object in the second digital map corresponds to the same real-world object as any given first digital map object in the first digital map. While the methods, systems, and devices may be operative to perform road network matching for map merging, the methods, systems, and devices are not limited thereto.

Various additional effects and advantages are attainable by embodiments of the invention. For illustration, when the ordered arrays of pixel values represent presence or absence of an object at the respective pixel or hierarchies of objects (such as road classes), the processing of the ordered pixel arrays by means of the ML model is facilitated. Robust and particularly reliable results are obtained.

For further illustration, when additional ordered arrays of pixel values are generated and used in the road network matching task, accuracy may be further improved. The additional ordered arrays of pixel values may comprise one or several ordered arrays that correspond to roads accessible to motor vehicles in a proximity of the first and second digital map objects. Alternatively or additionally, the additional ordered arrays of pixel values may comprise one or several ordered arrays that correspond to infrastructure elements that are accessible to pedestrians or cyclists, but which are prohibited for use by motor vehicles.

While the techniques disclosed herein may be used for map merging, they are also useful for, e.g., incorporating point of interest (POI) data from one digital map into another digital map.

The methods, systems, and devices do not require but still allow the ML model to be trained with the specific formats of the first and second digital maps. By virtue of the generation of the ordered pixel arrays, the trained ML model is applicable to a wide variety of different digital map data formats. Re-training may optionally be performed for specific map data formats but is normally not adamant.

### BRIEF DESCRIPTION OF THE DRAWINGS

Embodiments of the invention will be described with reference to the drawings in which similar or corresponding reference signs designate elements having similar or corresponding configuration and/or function.
Figure 1 is a block diagram of a map data processing system.
Figure 2 is a flow chart of a map data processing method.
Figure 3 shows a graphical representation of first and second digital maps.
Figure 4 shows a machine learning (ML) model that may be used in the map data processing system and method.
Figure 5 shows a machine learning (ML) model that may be used in the map data processing system and method.
Figure 6 shows a schematic block diagram illustrating an object matching process.
Figures 7, 8, 9, 10, 11, and 12 illustrate operation of the map data processing system method.
Figure 13 is a flow chart of a map data processing method.
Figures 14 and 15 illustrate operation of the map data processing system and method.

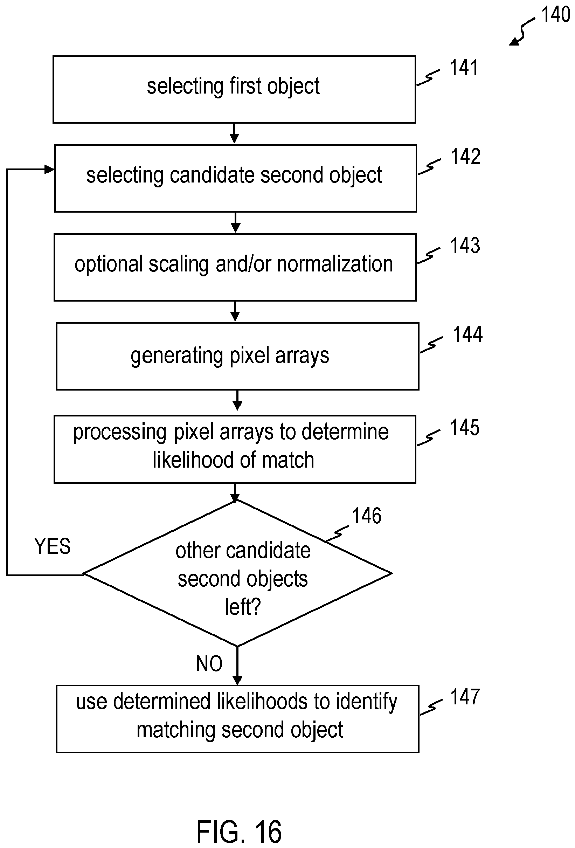

Figure 16 is a flow chart of a map data processing method.
Figures 17 and 18 illustrate operation of the map data processing system and method.
Figure 19 is a flow chart of a method according to an embodiment.
Figure 20 is a flow chart of a method according to an embodiment.
Figure 21 is a diagram of a system that comprises the map data processing system.
Figure 22 is a block diagram of a vehicle.
Figure 23 is a graph showing a representative comparison of processing results obtained using the method according to an embodiment as compared to a conventional method.

### DETAILED DESCRIPTION OF EMBODIMENTS

Embodiments of the invention will be described in detail. While embodiments will be described in association with merging first and second digital maps, the embodiments are not limited thereto.

The features of embodiments may be combined with each other unless specifically stated otherwise.

The techniques disclosed herein in detail may be used to perform an automatic feature calculation in, e.g., road network matching, without requiring feature engineering to be performed that relies on expert knowledge to develop a dedicated matching algorithm that is specific to the respective formats of first and second digital maps.

Matching objects in different digital maps is also referred to as road network matching in the art. As used herein, matching different objects in different digital maps or identification of corresponding objects refers to the identification of which object in one digital map corresponds to an object in another digital map in the sense that they represent the same real-world object. The objects may be representative of roads and may be modeled as edges of a graph, in particular as edges of an order graph.

As used herein, a first digital map object corresponds to a second digital map object if the two objects correspond to the same real-world element (e.g., road).

A likelihood of a first digital map object matching a second digital map object is, thus, the likelihood that the first and second digital map objects correspond to the same real-world object (e.g., the same road).

In embodiments, tensors may be employed. The tensors may combine different rectangular arrays of pixel values. The different rectangular arrays of pixel values may depict, for a region in which different digital maps overlap, the presence or absence of different objects at the respective pixels. Examples for the different objects include: the objects (e.g., roads) to be matched for determining the likelihood that they represent the same real-world object; roads adjacent to the objects to be matched; pathways prohibited for use by vehicles adjacent to the objects to be matched.

The number of different rectangular arrays of pixel values that are combined into a tensor is also referred to as the number of channels.

The techniques disclosed herein may utilize a trained machine learning (ML) model. The ML model may be an artificial neural network (ANN). The ML model may comprise three or more layers, such as three or more hidden layers. The ML model may be a deep learning model. The ML model may be or may comprise a convolutional neural network (CNN) or a residual neural network (Resnet). The ML model may comprise a CNN and a Resnet.

Such a ML model is particularly suitable to process the ordered arrays of pixel values which are representative of two-dimensional images. The invention is not limited to these specific ML model types but may use any processing that is capable of performing image classification. This is due to the fact that the matching task for digital map data is transformed, in techniques of embodiments, into an image classification task, with the image classification determining whether two ordered pixel arrays represent the same real-world object.

Methods, systems, and devices according to embodiments may be used for road network matching. Road network matching is a frequent problem where the goal is to determine which roads in one network correspond to which roads in another. As disclosed in more detail herein, embodiments can address this problem by translating the road network matching problem into an image classification problem. Deep-learning techniques or other ML techniques can then be applied to predict the matching of roads within separate networks. The result is a high-quality generic matching technique that does not involve the time conventionally required for feature engineering and that outperforms conventional techniques.

The methods, systems, and devices disclosed herein also encompass the use of the results of the road network matching. Accordingly, the results of the road network matching may be used for various functions, such as map merging and, ultimately, use of a data of a merged map for vehicle navigation, route guidance, autonomous driving, map updates, without being limited thereto.

The knowledge which roads in one map correspond to which roads in another map allows information to be imported from one map to another map. This information can be related to the road geometry, for example which roads are unique in one of the maps. But it can also be related to bring attributes from one map to the other. For illustration, point of interest (POI) information included in only one of the first and second digital maps may be imported into the other one of the digital maps once matching roads have been identified.

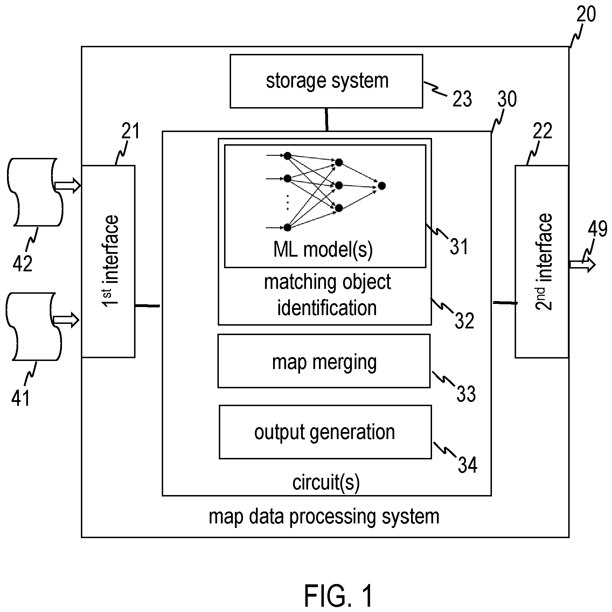

Figure 1 is a block diagram of a map data processing system 20. The map data processing system 20 may be part of a system that additionally includes a source of map data 41, 42 and/or systems or devices that use an output 49 of the map data processing system 20.

The map data processing system 20 comprises a first interface 21 operative to receive first and second digital maps 41, 42. The different digital maps do not need to have the same format. The first and second digital maps 41, 42 may be stored in a storage system 23.

The map data processing system 20 is operative to process the first and second digital maps 41, 42 to identify pairs of objects that correspond to each other, i.e., which represent the same real-world object.

The map data processing system 20 comprises one or several circuit(s) 30. The circuit(s) may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The circuit(s) 30 may be operative to process the digital maps 41, 42. The circuit(s) 30 may execute instruction code to implement a matching object identification module 32 that identifies matching objects in the first and second digital maps. the matching objects can be roads, without being limited thereto. The matching object identification module 32 may be operative to generate several ordered arrays of pixel values from the first and second digital maps. The matching object identification module 32 may be operative to process the several ordered arrays to determine one or several scores that indicate a likelihood that a first digital map object of the first digital map corresponds to a second digital map object of the second digital map.

The ordered arrays of pixel values comprise at least a first ordered array that represents a first digital map object in the first digital map and a second ordered array of pixels that represents a second digital map object in the second digital map. A classification technique may be applied to determine whether the first digital map object corresponds to the second digital map object. The classification technique may employ one or several trained machine learning (ML) models, in particular at least one deep learning model 31. Several trained ML models may be stored in the map data processing system 20. The several trained ML models may be used in parallel or consecutively, e.g., for even further improved accuracy and/or for cross-verification of obtained results. The several trained ML models may include ML models having different architecture, e.g., a different number of hidden layers.

The matching object identification module 32 may generate additional ordered arrays in addition to the first and second ordered arrays (for any pair of candidate objects for which the at least one score is to be determined). The additional ordered arrays may include ordered arrays that represent roads in proximity to the first and second digital map objects. The additional ordered arrays may include ordered arrays that represent pathways accessible to pedestrians and/or cyclists in proximity to the first and second digital map objects, which pathways may be prohibited for the use by motor vehicles. The additional ordered arrays may be input into the classifier (e.g., the ML model) for processing, thereby improving the matching accuracy.

A result of the matching of may be, for any pair of first and second digital map objects, at least one score which indicates the likelihood that the first digital map object corresponds to the second digital map object, i.e., that the first and second digital map objects represent the same real-world object.

The map data processing system 20 may execute a map merging module 33. The map merging module 33 may use the at least one score determined by the matching object identification. Map merging may comprise generating third digital map data. The third digital map data may include first data elements taken from the first map data and second data elements taken from the second map data. For any object, the information may be taken from the one of the first and second digital maps which provides better (e.g., more detailed and/or more recent and/or more versatile) data.

The map data processing system 20 may execute an output generation module 34. The output generation module 34 may generate output that depends directly or indirectly on the results of the matching object identification. For illustration, the output generation module 34 may prepare and transmit map updates that include updated map data from the third digital map generated by the map merging module 33, using the score determined by the matching object identification module 32.

The output 49 generated by the probe data processing system 20 may be output via a second interface 22. The second interface 22 may be operative to be communicatively interfaced with, e.g., navigation devices (including but not limited to mobile terminals of a cellular network), vehicle control devices, a map server, a map data storage repository, a navigation server, a traffic control server.

The operation of the map data processing system 20 will be described in more detail next. The map data processing system 20 may be operative to perform any one of the processing techniques described in detail below.

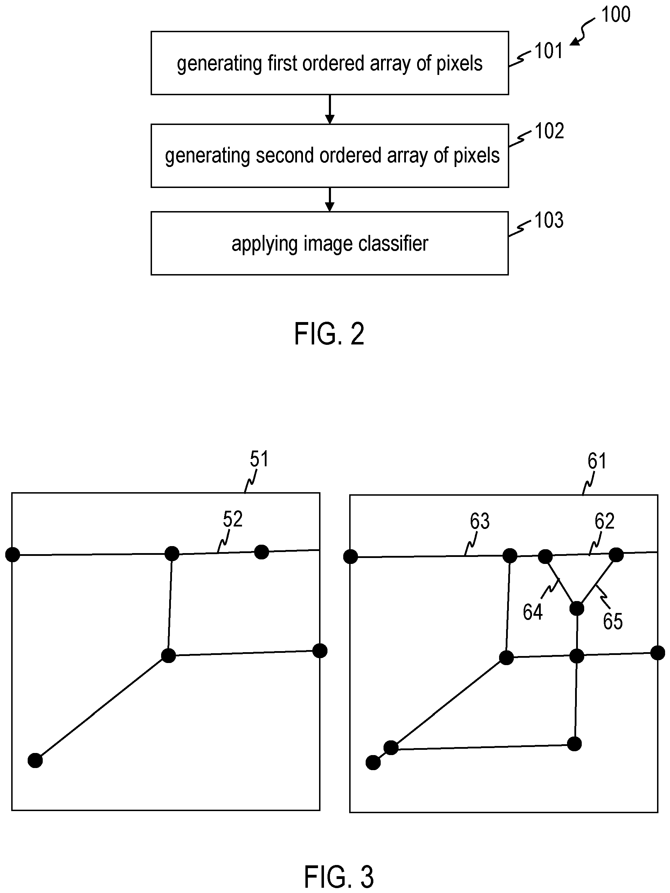

Figure 2 is a flow chart of a method 100. The method 100 may be performed automatically by the map data processing system 20.

At step 101, a first ordered array of pixel values is generated. The first ordered array of pixel values is generated from the first digital map. The first ordered array of pixel values may indicate, for any pixel in a region in which the first and second digital maps overlap, whether a particular first digital map object (e.g., a first road on which a motor vehicle is allowed to drive) is present or not at the respective pixel in the first digital map. The first ordered array of pixel values may have other formats. For illustration, it may indicate functional road classes or other indicators of a hierarchy of infrastructure objects as a function of pixel location as determined from the first digital map.

At step 102, a second ordered array of pixel values is generated. The second ordered array of pixel values is generated from the second digital map. The second ordered array of pixel values may indicate, for any pixel in the region in which the first and second digital maps overlap, whether a particular second digital map object (e.g., a second road on which a motor vehicle is allowed to drive) is present or not at the respective pixel in the second digital map. The second ordered array of pixel values may have other formats. For illustration, it may indicate functional road classes or other indicators of a hierarchy of infrastructure objects as a function of pixel location as determined from the second digital map.

At step 103, image classification is performed. An ML model, in particular a trained deep learning model, may be used to determine one or several scores which indicate whether the first digital map object corresponds to the second digital map object.

The results of the matching may be used in various ways, including, without limitation, map merging, navigation, map updates, autonomous driving.

Figure 3 illustrates a portion 51 of a first digital map and a portion 61 of a second digital map. The map data processing system and methods are operative to determine, for a first digital map object 52 in the first digital map, how likely it is that this first digital map object 52 and a second digital map object in the second digital map 61 represent the same real or-world object.

To solve this problem, two-dimensional pixel arrays are generated from the digital map data which include either the selected objects 52, 62 for which the likelihood is to be determined, or objects 63, 64, 65 adjacent to the selected objects 52, 62. It is preferred that none of the generated pixel arrays includes both an object for which the matching is to be performed in the respective processing step and an adjacent object. It is however acceptable that several adjacent objects (e.g., several adjacent roads) be concurrently present in the order pixel arrays.

It will be appreciated that, as illustrated in Figure 53, the different digital maps may represent a network of roads and other pathways to different levels of detail. For illustration, additional roads or pedestrian or bicycle pathways 64, 65 may be present in the second digital map 61.

While various image classifiers may be used, an ML model such as a trained deep learning model is particularly suitable to perform the image classification task. The processing comprises processing the first and second ordered pixel arrays to determine whether the objects 52, 62 correspond to each other.

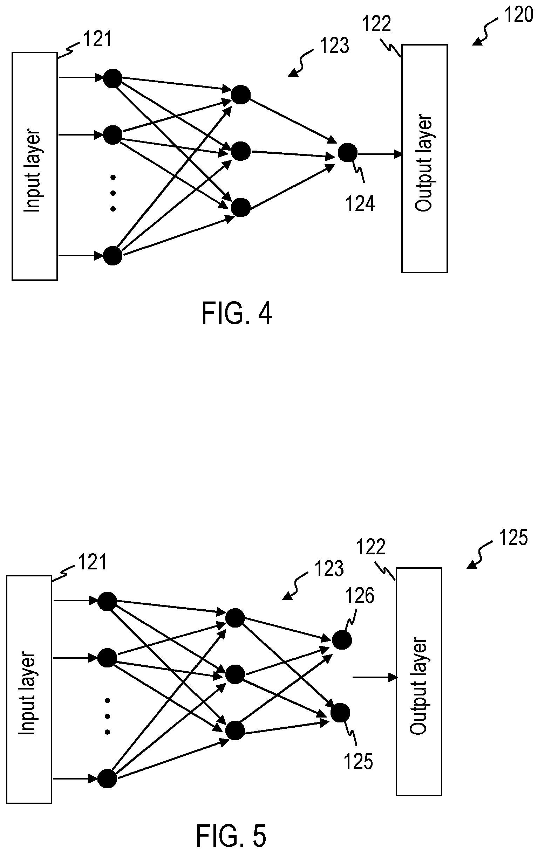

Figures 4 and 5 are schematic representations showing ML models 120, 125 which may be used. The ML models comprise an input layer 121. The input layer 121 is operative to receive several ordered arrays of pixel values, which include arrays of pixel values generated from the first digital map only and arrays of pixel values generated from the second digital map only. The input layer 121 may be operative to receive a number of pixel values generated from the first digital map only and a same number of pixel values generated from the second digital map only.

The ML model 120, 125 has an output layer 122. The output player 122 is operative to output one or several probabilities which indicate the probability that the first digital map object and the second digital map object match each other. There may be a single node 124 at the output which indicates a single probability value, or which indicates a binary result (match or no match).

There may be several nodes 126, 127 at the output of the ML model which provide several probabilities. For illustration, one of the nodes 126 may indicate how certain the classifier is that the first and second digital map object correspond to each other. The other one of the nodes 127 may indicate how certain the classifier is the first and second digital map objects do not correspond to each other.

Other ML model configurations may be used. Figures 4 and 5 are merely schematic. More complex hidden layer structures may be used, including convolutional layers and/or residual network structures.

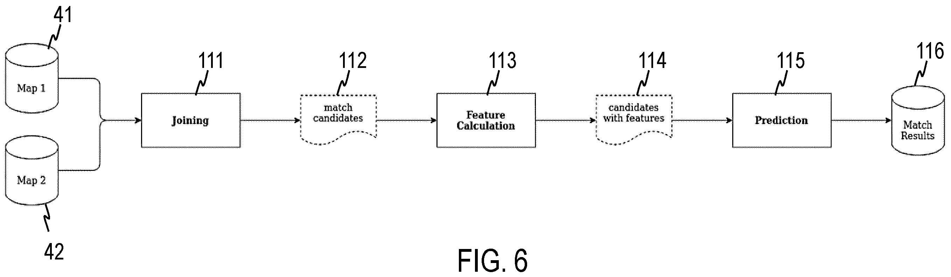

As mentioned above, the matching techniques disclosed herein may be used in various processes. One implementation is shown in Figure 6.

Figure 6 shows a block diagram of a process according to an exemplary embodiment in which the matching techniques disclosed herein may be used in a feature calculation 113 and prediction 115 of a process in which data elements from a first digital map 41 and from a second digital map 42 are matched for, e.g., combining them in a consolidated third digital map.

In a joining step 111, a first road of the first digital map 41 gets assigned potential matching candidates. The potential matching candidates may be all roads of the second digital map 42 located within a certain distance of the first road.

Match conditions 112 may include a pair of a first road of the first digital map 41 end a second road of the second digital map 42.

A feature calculation step 113 comprises the generation of ordered pixel arrays. At least two, four, six, eight or more ordered pixel arrays may be generated. The ordered pixel arrays may be considered to represent the first road (first ordered pixel array) and the second road (second ordered pixel array) for which the likelihood of correspondence is to be determined. Additional ordered pixel arrays may represent adjacent roads or adjacent pathways for pedestrians and/or bicyclists.

In the feature calculation step 113 each pair of candidate roads may be transformed into an associated tensor. The tensor may have Z channels, with Z being an even number which is 2 or greater than 2. Z/2 of the channels may be filled with pixel values determined from the first map data. The remaining Z/2 channels may be filled with pixel values determined from the second map data. Different channels may be used for the first and second roads to be matched, and for adjacent roads and/or pathways that are not navigable by motor vehicles.

The resulting pixel arrays are provided as features 114 to a prediction step 115. In the prediction step 115, the various ordered arrays of pixel values are input to an input layer of a ML model.

The ML model may be a deep learning model or other classifier which has been trained with, e.g., at least one hundred thousand tensors, or more. Supervised learning may be employed to train the deep learning model or other classifier. The output layer of the deep learning model or other classifier may provide a score which indicates how confident it is that the first and second roads match each other. This court is not particularly limited to, but may be selected from an interval of, e.g., 0 to 1. Scores close to 1 indicate a high confidence for a match. Scores close to 0 indicate a high confidence for a non-match.

The score which indicates the likelihood that the first road corresponds to the second road may be stored in match results 116 for subsequent use.

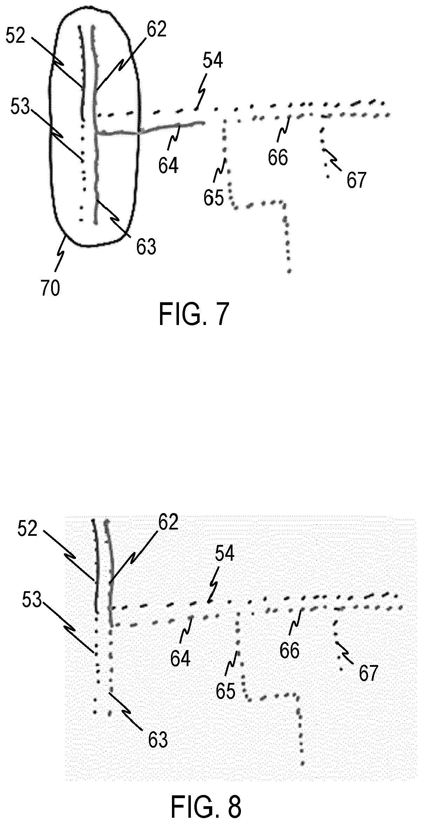

The process of matching objects is illustrated in, and will be explained in more detail with reference to, Figures 7 to 12.

Figure 7 shows roads 52, 53, 54 of a first digital map and roads 62, 63, 64, 65, 66, 67 of a second digital map.

In order to identify a match for a first digital map object 52 (e.g., a first road) of the first digital map, a second digital map object 62 within a neighborhood 70 of the first digital map object 52 is considered. Roads 63, 64 are also located in or overlapping with the neighborhood and will be processed similarly as a later candidate match.

To determine the likelihood that first road 52 corresponds to second road 62, all other roads 53, 54, 63-67 are treated as adjacent objects (including those second roads 63, 64 for which the matching also is to be performed).

The map data processing system and method generates a first ordered array 71 having pixel values that represent the first digital map object 52. The pixel values of the first ordered array 71 may be dependent on the first digital map object 52 only, e.g., by indicating the presence or absence of the first digital map object at the respective pixel in a binary manner. Non-binary pixel arrays may also be used.

The map data processing system and method generates a second ordered array 72 having pixel values that represent the second digital map object 62. The pixel values of the second ordered array 72 may be dependent on the second digital map object 62 only, e.g., by indicating the presence or absence of the second digital map object at the respective pixel in a binary manner. Non-binary pixel arrays may also be used.

At least one additional first ordered array 73 may be generated from the first digital map. The at least one additional first ordered array 73 may comprise a pixel array that indicates presence or absence of adjacent roads 59 from the first digital map. The at least one additional first ordered array 73 may comprise a pixel array that indicates presence or absence of bike pathways and/or pedestrian pathways within the region in first digital map.

At least one additional second ordered array 74 may be generated from the second digital map. The at least one additional second ordered array 74 may comprise a pixel array that indicates presence or absence of adjacent roads 69 from the second digital map. The at least one additional second ordered array 74 may comprise a pixel array that indicates presence or absence of bike pathways and/or pedestrian pathways within the region in second digital map.

While the ordered pixel arrays 71-74 are shown as binary pixel arrays (with each pixel having one pixel value to indicate presence of a map object at the pixel location and another pixel value to indicate absence of the respective map object at the pixel location), more complex pixel arrays may be generated. For illustration, the pixel arrays may include functional road classes or other indicators for road hierarchy as pixel values.

The pixel values of the ordered pixel arrays 71-74 are input to the input layer of the ML model, which outputs a score indicating the likelihood of the first digital map object 52 matching the second digital map object 62.

The various ordered pixel arrays 71-74 in combination form a three-dimensional tensor of size X × Y × Z. Here, X and Y are integers which denote the size (in pixels) of each of the ordered pixel arrays 71-74. Z denotes the number of ordered pixel arrays that is generated for any given pair of first and second digital map objects to perform the matching.

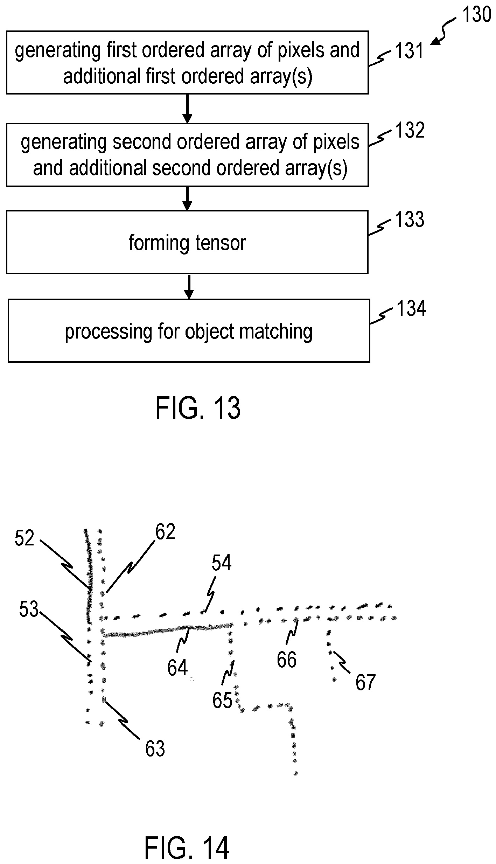

Figure 13 is a flow chart of a method 130. The method 130 may be performed automatically by the map data processing system 20.

At step 131, a first ordered array of pixel values and at least one additional first ordered array of pixel values are generated. The first ordered array of pixel values and the at least one additional first ordered array of pixel values are generated from the first digital map. The first ordered array of pixel values may indicate, for any pixel in a region in which the first and second digital maps overlap, whether a particular first digital map object (e.g., a first road on which a motor vehicle is allowed to drive) is present or not at the respective pixel in the first digital map. The additional first ordered array(s) of pixel values may indicate, for any pixel in a region in which the first and second digital maps overlap, additional objects that may be useful for enhancing the matching accuracy. These additional objects may include roads adjacent to the first ordered array, and/or bike pathways and/or pedestrian pathways that are prohibited for use by motor vehicles but may still be used for enhanced matching accuracy. The additional first ordered array(s) of pixel values may indicate, whether objects adjacent the first digital map object (e.g., adjacent roads) are present or not at the respective pixel in the first digital map.

Other formats may be used. For illustration, the pixel values may indicate functional road classes as a function of pixel location as determined from the first digital map. Other values indicative of an hierarchy of infrastructure objects may be employed in a non-binary pixel array.

At step 132, a second ordered array of pixel values and at least one additional second ordered array of pixel values are generated. The second ordered array of pixel values and the at least one additional second ordered array of pixel values are generated from the second digital map. The second ordered array of pixel values may indicate, for any pixel in a region in which the second and second digital maps overlap, whether a particular second digital map object (e.g., a second road on which a motor vehicle is allowed to drive) is present or not at the respective pixel in the second digital map. The additional second ordered array(s) of pixel values may indicate, for any pixel in a region in which the second and second digital maps overlap, additional objects that may be useful for enhancing the matching accuracy. These additional objects may include roads adjacent to the second ordered array, and/or bike pathways and/or pedestrian pathways that are prohibited for use by motor vehicles but may still be used for enhanced matching accuracy. The additional second ordered array(s) of pixel values may indicate whether objects adjacent the second digital map object (e.g., adjacent roads) are present or not at the respective pixel in the second digital map.

Other formats may be used. For illustration, the pixel values may indicate functional road classes as a function of pixel location as determined from the second digital map. Other values indicative of an hierarchy of infrastructure objects may be employed in a non-binary pixel array.

At step 133, a tensor is formed. The tensor includes the first ordered array, the additional first ordered array(s), the second ordered array, and the additional second ordered array(s) in different channels.

At step 134, the tensor is processed for determining the likelihood of the first digital map object matching the second digital map object. Step 134 comprises processing of all pixel values by a ML model. The input layer of the ML model may have X · Y · Z input nodes to receive the pixel values of the tensor.

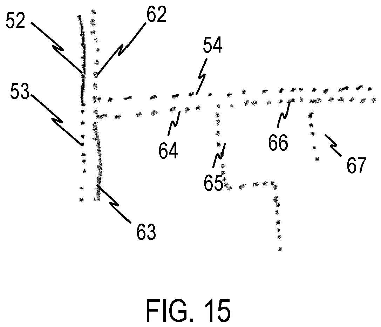

The processing explained is typically performed for more than one pair of objects to find the best match for a first digital map object 52 in the second digital map. For illustration, as schematically illustrated in Figures 14 and 15, the matching may be sequentially performed for additional candidate second digital map objects 64 (shown as solid line in Figure 14) and 63 (shown as solid line in Figure 15). It will be appreciated that, when the second digital map objects 63 is processed as a candidate for matching with the first digital map object 52, the second digital map object 62 would have to be treated as an "adjacent" road segment that needs to be included in the additional second array 74. Similarly, when the second digital map objects 64 is processed as a candidate for matching with the first digital map object 52, the second digital map object 62 would have to be treated as an "adjacent" road segment that needs to be included in the additional second array 74.

Figure 14 is a flow chart of a method 140. The method 140 may be performed automatically by the map data processing system 20.

At step 141, a first digital map object is selected from the first digital map. The first digital map object may be a first edge of a first graph representing a road network in the first digital map.

At step 142, a candidate second digital map object is selected from the second digital map. The candidate second digital map object may be a second edge of a second graph representing the same road network in the second digital map.

At step 143, scaling and/or normalization may optionally be performed. The scaling and/or normalization may ensure that the relevant part of the first and second digital maps is included in a rectangular, preferably square pixel array of size X x Y.

At step 144, several ordered arrays of pixel values are generated. The several ordered arrays may comprise one or several ordered arrays generated from the first digital map and a same number of ordered arrays generated from the second digital map.

At step 145, image classification is performed to determine the likelihood of the candidate second digital map object matching the first digital map object.

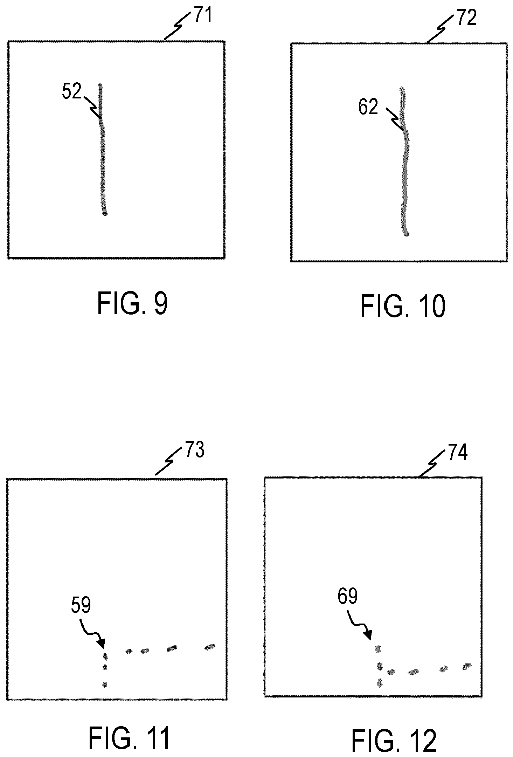

At step 146, it is determined whether there are any additional candidate second digital map objects left. Referring to Figures 7, 14, and 15, second digital map objects 63, 64 are identified as candidate second digital map objects as they are located within a distance 70 around the first digital map object 52. Thus, the method returns to step 142 and steps 142-146 are repeated. In each iteration, the determined at least one score may be stored for later use. The additional ordered arrays which indicate the adjacent roads (as illustrated as arrays 73, 74 in Figures 11 and 12) need to be modified in each iteration to account for the fact that another candidate second digital map object is being processed in the respective iteration.

At step 147, the scores determined for each pair of the first digital map object and the various candidate second digital map objects are used to identify the one of the candidate second digital map objects which is most likely to correspond to the same real-world object as the first digital map object.

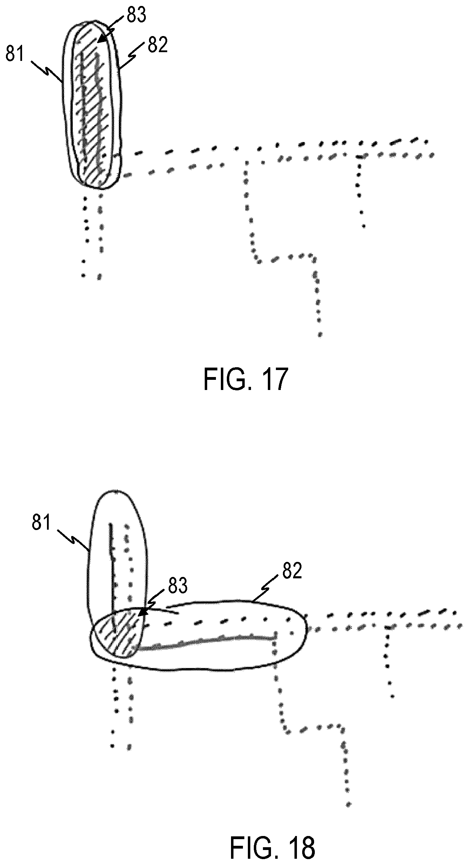

The scaling and/or normalization step 143 is an optional but advantageous step which has the effect of zooming into an area that is most relevant for the matching. The processing is shown in Figures 17 and 18.

A first map buffer 81 is defined around the first digital map object and a second map buffer 82 is defined around the candidate second digital map object. The overlap or common part of these buffers is a shared buffer 83.

The shared buffer 83 can have any size and originally need not be square. For the classifier to work well, the geometry of the shared buffer 83 is scaled and translated so that it fits within the rectangular pixel array of size X x Y. For illustration, the scaling factor applied to the shared buffer 83 in Figure 17 is different from the scaling factor applied to the shared buffer 83 in Figure 18, which is smaller in size and therefore can be fit more easily into the rectangular (preferably square) pixel array of size X x Y.

The scaling and translation, if applied, is taken into consideration when generating the ordered arrays of pixel values. I.e., the objects in the first and second digital maps are scaled and/or translated in accordance with the normalization applied to the shared buffer area. A visual example of the various ordered arrays of pixel values and their processing has been provided with reference to Figures 9 to 12.

The results of the object matching may be used for various purposes, including but not limited to map merging.

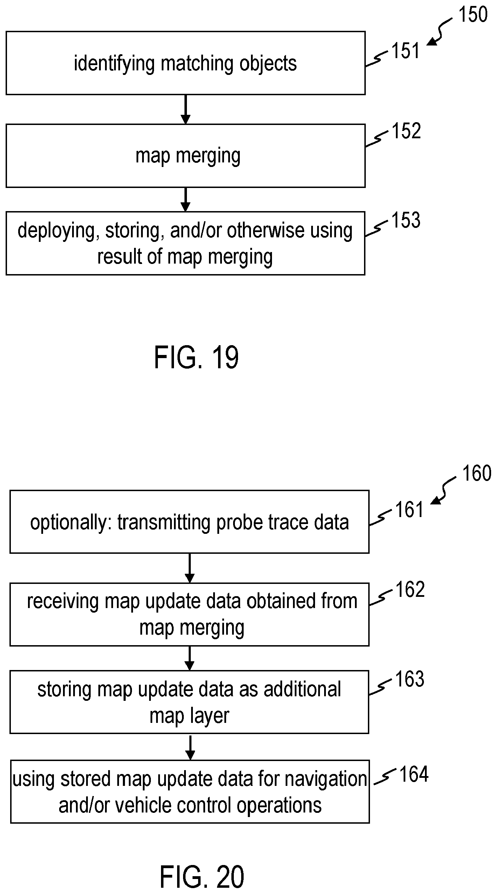

Figure 19 is a flow chart of a method 150. The method 150 may be performed automatically by the map data processing system 20.

At step 151, matching objects are identified in the first digital map and the second digital map. Step 151 may be performed using any one of the techniques described above.

At step 152, map merging is performed using the results of the matching. Map merging may include using at least some data elements of the first digital map in combination with at least some data elements of the second digital map. Attributes, geometries, or other information associated with the first and second digital map objects may be combined. Map merging may involve determining which of the two digital maps provides, for any object, better information in terms of, e.g., accuracy, level of detail, and/or timeliness. Depending on the determination, information may be selected from one of the two digital maps for any of the objects. Information elements included in the different digital maps may be aggregated once the matching objects (e.g., roads) are identified.

At step 153, a result of the map merging may be used. Using the results of the map merging may comprise providing, storing, and/or otherwise using at least part of the data elements of the third digital map obtained by the merging step 152. The merged map data obtained at the merging step 152 may be added to an additional layer of map data. This applies irrespective of whether or not the results of the map merging are stored in a server, map data repository, navigation device (including but not limited to a mobile communication terminal such as a smartphone), or vehicle control system.

Results of the object matching, such as results of a map merging, may be received and used by navigation devices or vehicle control systems.

Navigation devices (which may be but are not limited to a mobile communication terminal such as a smartphone) or vehicle control systems may not only use the results of the process but may also contribute to at least one of the first and second digital maps. For illustration, at least one of the first and second digital maps may be a map that includes edges determined based on probe trace data transmitted by probes such as navigation devices or other onboard vehicles systems.

The "probe trace data" may be or may comprise a location trace. The location trace may be a GPS trace, a Galileo trace, another global navigation satellite system (GNSS) trace, or Floating car data, without being limited thereto. The probe trace data may be or may comprise information derived from a location trace. The probe trace data may indicate locations using area identifiers designating different areas or using more refined location indications, such as coordinates referenced to a reference frame.

The term "probe" as used herein encompasses a navigation device but need not be limited thereto. Probe traced data may indicate probe traces also for devices that do not perform navigation-related functions. A probe may be an in-dashboard navigation device, a portable navigation device (PND), a mobile terminal (MT) of a cellular communication network (e.g., a smartphone) that may (but does not need to) perform a navigation-related operation, without being limited thereto.

Thus, at least one of the first and second digital maps may comprise digital map data that is determined based on probe trace data. The methods disclosed herein may comprise generating at least one of the first and second digital maps using the probe trace data. Techniques such as those disclosed in EP 3 977 051 A1 or EP 2 923 177 A1 may be used for generating the respective digital map data.

Figure 20 is a flow chart of a method 160. The method 160 may be performed by or using a navigation device or a vehicle control system. The navigation device may be a portable device, such as a cellular telephone or other communication terminal, a dedicated navigation device that can be removably provided in a vehicle, or a navigation device that may be fixedly installed in a vehicle.

At optional step 161, probe trace data is transmitted by the navigation device or vehicle control system. The probe trace data may be determined using a global navigation satellite system (GNSS) such as a global positioning system (GPS) position sensor. Transmission of the probe trace data allows at least one of the first and second digital maps to be generated or modified based on actual traces of vehicles as recorded during field operation of the vehicles.

At step 162, map update data are received by the navigation device or a vehicle control system. The map update data comprise data elements of a map obtained using the map merging techniques described in detail herein. In particular, the map update data comprise data elements of a merged map that has been determined using the at least one score of the object matching procedure.

At step 163, the received map update data may be used for local storage and local updating at the navigation device or vehicle control system. The map update data may be stored as an additional layer of an existing digital map of the navigation device or vehicle control system. This allows the additional map layer to be selected by a user of the navigation device or vehicle control system while still affording the option of continued use of data elements of the previous map.

At step 164, the stored map update data may be used for navigation operations and/or vehicle control operations. Navigation operations may include route search, route guidance including the control of a human machine interface (HMI), outputting of alarms and warnings by controlling an HMI. Vehicle control operations may comprise automatic steering, engine control, and/or breaking operations.

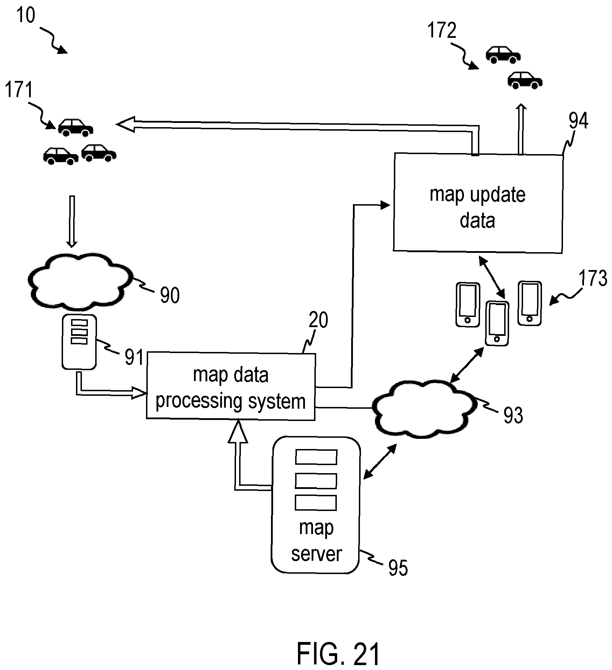

Figure 21 is a diagram of a system 10 that comprises the processing system 20. The system 10 may comprise probes located in vehicles 171 that agreed to share probe trace data for determining map updated from probe traces. The system 10 may comprise probes located in vehicles 172 that have not agreed to share probe trace data for determining map updated from probe traces.

The probe trace data may be collected by a server 91 via a wide area network 90, such as over wireless communication pathways. The server 91 may aggregate the probe trace data. The probe trace data or a digital map generated therefrom may be provided to the map data processing system 20. As mentioned above, determination of at least part of the first or second digital maps from probe trace data is optional, and the probes 171 and server 91 may be omitted.

The map data processing system 20 may receive map data of the first and/or a second digital maps from a map server 95. The map data processing system 20 may process the first and second digital maps as previously explained to thereby determine matching objects in the first and second digital maps.

The results of the object matching may be used for map merging and determining map data update information 94 that may be provided to navigation devices. The map data update information 94 may be transmitted, via a push or pull mechanism, for use by navigation devices that are operative to be arranged in vehicles 171, 172, to vehicle control systems, and/or to communication terminals 173 that use the map update information (e.g., for performing map updates, such as by storing the map update information in an additional layer of the map data).

The map data update information may be used for various purposes, such as performing navigation or vehicle control operations, or providing data of the merged map for use by terminals.

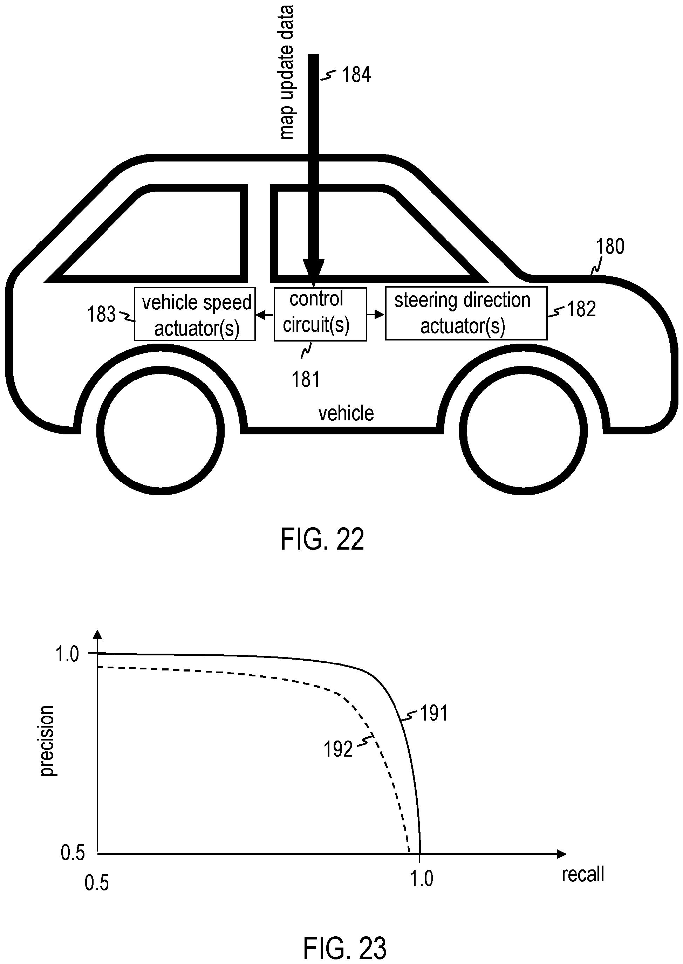

Figure 22 is a diagram of a vehicle 180 that may be comprised by the system 10. The vehicle 180 may be operative to perform autonomous driving operations.

The vehicle 180 comprises one or several control circuit(s) 181 operative to control actuator(s) of the vehicle 180 in an autonomous manner. The control circuit(s) 181 are operative to control at least some of the actuator(s) responsive to map update data 184. The control circuit(s) 181 may be operative to control at least an actuator 182 operative that affects a driving direction and an actuator 183 that affects a vehicle speed responsive to the map update data 184. For illustration, steering wheel angle and/or vehicle speed (e.g., engine output) may be controlled in a time-dependent manner by the control circuit(s) 181 so as to cause the vehicle to perform a driving maneuver that takes into account the map update data 184. The map update data 184 may be received via a wireless interface of the vehicle 180, e.g., via a cellular communication interface and/or a vehicle-to-vehicle (V2V) interface.

While exemplary use cases in which the object matching process can be deployed have been described in detail, the object matching may be used in a variety of additional scenarios.

The techniques disclosed herein provided various technically effects.

The systems, methods, and devices require little domain knowledge. In particular no or little domain knowledge is required for feature engineering. This is a significant improvement over conventional techniques which heavily rely on the domain knowledge to perform feature engineering to device tailored and map data format-dependent techniques for object matching. Thus, the systems, methods, and devices disclosed herein mitigate the errors that may be caused by designing and implementing feature engineering in a situational manner using domain knowledge, by obviating or reducing the need for relying on domain knowledge.

The systems, methods, and devices can be used for any two maps and any type of situation, as long as the ML model (e.g., deep learning model) has enough example images to be trained. It is possible but not required to use distinct ML models for different digital map types. The generation of the ordered pixel arrays allows the disclosed systems, methods, and devices to operate without requiring specific retraining of the ML model to the respective formats of the first and second digital maps.

The systems, methods, and devices lend themselves to visualization. Different channels of the tensor can be color-coded and output via a human machine interface (HMI). In the tensor has more than three channels, the tensors can be flattened to 3-channel tensors, which can be visualized as, e.g., RGB-images.

The systems, methods, and devices can use techniques known from deep learning on tensors for which many architectures and techniques exist to create high quality, scalable predictions from images. By translating the road network matching problem to an image classification problem, these techniques may be employed to determine the likelihood of two objects matching each other.

Importantly, the systems, methods, and devices provide enhanced quality as compared to conventional matching techniques. The systems, methods, and devices can attain a high precision/recall balance. For illustration, a 96% recall is reached at 99% precision for, e.g., an average of measured on at least 50k labels distributed on 50 countries.

Figure 23 is a graph which shows precision-recall curves for the method according to an embodiment (curve 191) as compared to a conventional method (curve 192). The precision of the method according to an embodiment outperforms the conventional method.

While embodiments have been described with reference to the drawings, modifications and alterations may be implemented in other embodiments.

For illustration, while embodiments have been described which can generate and use eight ordered arrays of pixel values for object matching for any pair of objects, a smaller or even greater number of ordered arrays of pixel values can be generated and input to an ML model for classification.

For further illustration, while embodiments have been described in which GPS or other location traces may be processed to generate edges for at least one of the first and second digital maps, it is not required for probe trace data to be used when generating any of the digital maps.

Various effects and advantages are attained by embodiments of the invention. For illustration, embodiments provide methods, systems, and devices that provide enhanced accuracy for matching objects in different digital maps. The methods, systems, and devices thereby provide enhanced techniques useful for map merging, navigation operations, driving assistance, or autonomous driving, without being limited thereto.

## Claims

1. A method of processing a first digital map (41; 51) and a second digital map (42; 61), the method comprising the following steps performed by at least one integrated circuit (30):
using the first digital map (41; 51) to generate a first ordered array of pixels (71), the first ordered array of pixels (71) representing a first digital map object (52) in a region contained in both the first digital map (41; 51) and the second digital map (42; 61), the first digital map object (52) being included in the first digital map (41; 51);
using the second digital map (42; 61) to generate a second ordered array of pixels (72), the second ordered array of pixels (72) representing a second digital map object (62) in the region, the second digital map object (62) being included in the second digital map (42; 61);
using a machine learning, ML, model (31; 120) to determine at least one score indicative of a likelihood that the first digital map object (52) corresponds to the second digital map object (62),
wherein the ML model (31; 120) has an input layer (121) that receives at least the first ordered array of pixels (71) and the second ordered array of pixels (72), and
wherein the ML model (31; 120) has an output layer (122) that outputs the at least one score.

2. The method of claim 1,
wherein all pixel values are selected from a group comprising a first set of one or more first pixel values and a second set of one or more second pixel values,
wherein a pixel of the first ordered array of pixels (71) has a pixel value included in the first set of one or more first pixel values if the first digital map object (52) overlaps the pixel,
wherein a pixel of the first ordered array of pixels (71) has a pixel value included in the second set of one or more second pixel values if the first digital map object (52) does not overlap the pixel,
wherein a pixel of the second ordered array of pixels (72) has a pixel value included in the first set of one or more first pixel values if the object overlaps the pixel, and
wherein a pixel of the second ordered array of pixels (72) has a pixel value included in the second set of one or more second pixel values if the object does not overlap the pixel.

3. The method of claim 1 or claim 2,
wherein the first ordered array of pixels (71) and the second ordered array of pixels (72) are arrays of binary pixel values.

4. The method of any one of the preceding claims, wherein the input layer (121) further receives
a third ordered array of pixels (73) representing one or several additional first digital map objects (59) in the region, the one or several one or several additional first digital map objects (59) being included in the first digital map (41; 51) and being different from the first digital map object (52), and
a fourth ordered array of pixels (74) representing one or several additional second digital map objects (69) in the region, the one or several one or several additional second digital map objects (69) being included in the second digital map (42; 61) and being different from the second digital map object (62).

5. The method of any one of the preceding claims,
wherein the first digital map (41; 51) comprises first nodes and first edges (52-54) interconnecting the first nodes,
wherein the second digital map (42; 61) comprises second nodes and second edges (62-67) interconnecting the second nodes,
wherein the first digital map object (52) is one of the first edges (52-54), and
wherein the second digital map object (62) is one of the second edges (62-67).

6. The method of claim 5,
wherein the first edges (52-54) and the second edges (62-67) represent infrastructure objects on which motor vehicles are allowed to drive,
optionally wherein the first edges (52-54) and the second edges (62-67) represent infrastructure objects on which cars are allowed to drive.

7. The method of claim 5 or claim 6,
wherein the first digital map (41; 51) further comprises additional first edges representing infrastructure objects prohibited for use by motor vehicles,
wherein the second digital map (42; 61) further comprises additional second edges representing infrastructure objects prohibited for use by motor vehicles,
wherein the input layer (121) further receives
one or several first additional ordered arrays of pixels representing at least one of the additional first edges, and
one or several second additional ordered arrays of pixels representing at least one of the additional second edges,
optionally wherein the additional first edges comprise bike and/or pedestrian pathways in the first digital map (41; 51) and optionally wherein the additional second edges comprise bike and/or pedestrian pathways in the second digital map (42; 61).

8. The method of claim 7,
wherein the first ordered array of pixels (71), the second ordered array of pixels (72), each of the one or several first additional ordered arrays of pixels, and each of the one or several second additional ordered arrays of pixels respectively consists of X x Y pixels,
wherein X and Y are integers greater than 1, and
wherein the region is a rectangular region comprising the X x Y pixels,
optionally wherein Y is equal to X.

9. The method of any one of the preceding claims, further comprising
generating a three-dimensional tensor that comprises at least the first ordered array of pixels (71) and the second ordered array of pixels (72),
wherein the input layer (121) receives the three-dimensional tensor,
optionally wherein the three-dimensional tensor has size X × Y × Z, wherein X, Y, and Z are integers, wherein X and Y are greater than 1, and wherein Z is equal to or greater than 2, equal to or greater than 4, or equal to or greater than 8.

10. The method of any one of the preceding claims,
wherein the ML model (31; 120) is a deep learning model (31; 120), and/or
wherein the method further comprises:
training the ML model (31; 120) using training data, wherein the training data comprises labels,
wherein the labels indicate, for each of a plurality of sets of first and second edges of two distinct digital training maps, whether the first edge corresponds to the second edge.

11. The method of any one of the preceding claims,
wherein the first digital map (41; 51) and/or second digital map (42; 61) comprises data generated using probe trace data,
optionally wherein the method further comprises using the at least one score to at least one of:
determine whether a map update is to be performed;
initiate a map merging of the first digital map (41; 51) and the second digital map (42; 61).

12. The method of any one of the preceding claims, further comprising
performing a map merging to generate a third digital map from the first digital map (41; 51) and the second digital map (42; 61),
wherein the map merging uses the score to determine whether the first digital map object (52) in the first digital map (41; 51) corresponds to the second digital map object (62) in the second digital map (42; 61),
optionally wherein the map merging comprises combining attributes of the first digital map object (52) in the first digital map (41; 51) and attributes of the second digital map object (62) in the second digital map (42; 61) if the score indicates that the first digital map object (52) corresponds to the second digital map object (62), and/or
optionally wherein the method further comprises at least one of:
outputting the third digital map to at least one navigation device (173) for use in a vehicle navigation operation or a vehicle control operation, further optionally wherein data of the third digital map is added in an additional layer of map data;
using, by at least one server (95), the third digital map to perform a vehicle navigation operation;
providing the third digital map for storage in a map data repository (95).

13. The method of claim 12, further comprising
using, by at least one navigation device (173) or control circuit (181) onboard a vehicle, data of the third digital map to perform at least one:
a vehicle control operation, optionally wherein the vehicle control operation comprises an autonomous driving operation or a driving assist operation;
a vehicle navigation operation, optionally wherein the vehicle navigation operation comprises one or several of a route search, route guidance, generation of warnings or alarms.

14. A method of providing or updating digital map data of a navigation device, the method comprising:
executing the method of any one of the preceding claims;
using the at least one score to provide or update at least part of the digital map data of the navigation device (173) or a vehicle control device (181),
optionally wherein an additional digital map layer is stored in the digital map data of the navigation device, further optionally wherein the additional digital map layer includes at least some data elements of the third digital map determined using the method of claim 12.

15. A computing system for processing a first digital map (41; 51) and a second digital map (42; 61), the computing system comprising:
a storage system (23) operative to store the first digital map (41; 51) and the second digital map (42; 61); and
at least one integrated circuit (30) coupled to the storage system (23) and operative to:
use the first digital map (41; 51) to generate a first ordered array of pixels (71), the first ordered array of pixels (71) representing a first digital map object (52) in a region contained in both the first digital map (41; 51) and the second digital map (42; 61), the first digital map object (52) being included in the first digital map (41; 51);
use the second digital map (42; 61) to generate a second ordered array of pixels (72), the second ordered array of pixels (72) representing a second digital map object (62) in the region, the second digital map object (62) being included in the second digital map (42; 61);
use a machine learning, ML, model (31; 120) to determine at least one score indicative of a likelihood that the first digital map object (52) corresponds to the second digital map object (62),
wherein the ML model (31; 120) has an input layer (121) that receives at least the first ordered array of pixels (71) and the second ordered array of pixels (72), and
wherein the ML model (31; 120) has an output layer (122) that outputs the at least one score;
optionally wherein the at least one integrated circuit (30) is operative to perform the method of any one of claims 2 to 14.
